# EUROPEAN PATENT APPLICATION

(11) **EP 4 560 443 A1**
(43) Date of publication of application: **28.05.2025**
(21) Application number: 24215493.8
(22) Date of filing: 26.11.2024
(51) Int. Cl.: G06F 3/01, G06T 13/40, G06T 15/00

(54) **REAL-TIME RENDERING OF ANIMATED OBJECTS**

(30) Priority: 27.11.2023 US 202363603048 P; 22.11.2024 US 202418956099
(71) Applicant: Meta Platforms Technologies, LLC, Menlo Park, CA 94025 (US)
(72) Inventor: Aksoy, Volga, Menlo Park (US); Htet, Zeyar, Menlo Park (US); Nourai, Reza, Menlo Park (US)
(74) Representative: Murgitroyd & Company

(57) **Abstract**

A method for rendering a frame includes receiving, from a server, a color texture and a depth mesh associated with an object to be rendered, the depth mesh including multiple vertices and metadata associated with the vertices. The method further includes receiving motion data associated with the object, warping the depth mesh using the metadata and the motion data, resulting in a warped depth mesh, and rendering one or more frames using the color texture and the warped depth mesh.

## Description

### CROSS-REFERENCE OF RELATED APPLICATION

This application claims the benefit of U.S. Provisional Application 63/603,048, filed on November 27, 2023, which is incorporated herein in its entirety.

### TECHNICAL FIELD

This disclosure generally relates to artificial-reality systems, and in particular, related to rendering objects.

### BACKGROUND

Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted device (HMD) connected to a host computer system, a standalone HMD, a mobile device or computing system, or any other hardware platform capable of providing artificial reality content to one or more viewers.

An HMD may need to offload rendering to another device, such as a server on cloud because the HMD may not have enough computing power. However, the offloading may cause an unacceptable latency in certain situations such as when the HMD needs to display real-time content adjusted based on the user's latest head/body pose. As a previous approach to resolve such problems, a computing device, such as a server on a cloud or a laptop connected to the HMD, may render a representation of a scene, including texture and geometry (mesh) information. Such data may be sent to the HMD for local rendering. The data may be used to render multiple frames (e.g., 5 frames). This approach would work well for static objects and account for differences in the scene caused by the user's head movements. However, the approach may not work for scene differences attributable to object animation (e.g., an avatar/dog moving).

The invention concerns artificial-reality systems, and in particular, rendering objects in artificial-reality systems and for example displayed on a HMD. Particular embodiments described herein relate to systems and methods for rendering a moving object in detail by warping a mesh corresponding to the moving object.

### SUMMARY

A first aspect of the invention provides a method for rendering a frame, including receiving, from a server, a color texture and a depth mesh associated with an object to be rendered, the depth mesh including a group of vertices and metadata associated with the group of vertices. The method further includes receiving motion data associated with the object, warping the depth mesh using the metadata and the motion data, resulting in a warped depth mesh, and rendering one or more frames using the color texture and the warped depth mesh.

In some embodiments, the motion data is received from the server.

In some embodiments, warping the depth mesh comprises warping the plurality of vertices based on the motion data.

In some embodiments, the metadata further comprises a plurality of joint identifiers, each joint identifier associated with one or more vertices.

In some embodiments, warping the depth mesh comprises imposing at least one physical constraint on the plurality of vertices based on the joint identifiers.

In some embodiments, the plurality of vertices define an exterior contour of the object.

In some embodiments, the depth mesh is generated by the server based on a depth map associated with the object.

In some embodiments, the method is performed by a head-mounted device worn by a user to display a mixed reality environment thereto. In some embodiments, the head-mounted device comprises one or more motion sensors, and the motion data is received from the one or more motion sensors.

In some embodiments, the mixed reality environment comprises a user avatar associated with the user, and the object to be rendered is a hand of the user avatar. Optionally in such a case, the metadata further comprises a left hand identifier associated with the first subset of the vertices and a right hand identifier associated with the second subset of vertices. Additionally or alternatively, the mixed reality environment comprises a user avatar associated with the user, and the object to be rendered is held by one or more hands of the user avatar.

Additionally or alternatively, the object to be rendered is an animated object in the mixed reality environment within a field of view of the user.

In some embodiments, the motion data comprises velocity and acceleration data associated with the plurality of vertices.

A second aspect of the invention provides a non-transitory computer-readable medium storing a program for rendering a frame, which when executed by a computer system, configures the computer system to receive, from a server, a color texture and a depth mesh associated with an object to be rendered, the depth mesh including a group of vertices and metadata associated with the group of vertices. The program, when executed by the computer system, further configures the computer system to receive motion data associated with the object, warp the depth mesh using the metadata and the motion data, resulting in a warped depth mesh, and render one or more frames using the color texture and the warped depth mesh, the depth mesh being generated by the server based on a depth map associated with the object.

For example, the second aspect of the invention provides a non-transitory computer-readable medium storing a program for rendering a frame, which when executed by a computer system, configures the computer system to perform steps of the method of the first aspect of the invention and features thereof will be understood by analogy.

In some embodiments, the program, when executed by the computer, further configures the computer system to: receive updated motion data associated with the object; make a determination that the color texture and the depth mesh are valid; based on the determination, warp the depth mesh using the metadata and the updated motion data, resulting in a second warped depth mesh; and render one or more additional frames using the color texture and the second warped depth mesh.

In some embodiments, the motion data is received from the server.

In some embodiments, the program, when executed by the computer, further configures the computer system to: receive signals from one or more sensors; and generate the motion data based on the received signals.

A third aspect of the invention provides a head-mounted device including a processor, one or more motion sensors, and a non-transitory computer readable medium storing a set of instructions for rendering a frame, which when executed by the processor, configure the head-mounted device to receive, from a server, a color texture and a depth mesh associated with an object to be rendered, the depth mesh including a group of vertices and metadata associated with the group of vertices. The instructions, when executed by the processor, further configure the processor to receive, from the one or more motion sensors, motion data associated with the object, warp the depth mesh using the metadata and the motion data, resulting in a warped depth mesh, and render one or more frames using the color texture and the warped depth mesh, the depth mesh being generated by the server based on a depth map associated with the object.

For example, the third aspect of the invention provides a head-mounted device including a processor, one or more motion sensors, and a non-transitory computer readable medium storing a set of instructions for rendering a frame, which when executed by the processor, configure the head-mounted device to perform, in association with a server, steps of the method of the first aspect of the invention and features thereof will be understood by analogy.

Particular embodiments described herein relate to systems and methods for rendering a moving object in detail by warping a mesh corresponding to the moving object. An HMD may need to offload rendering to another device, such as a server on cloud because the HMD may not have enough computing power. However, the offloading may cause an unacceptable latency in certain situations such as when the HMD needs to display real-time content adjusted based on the user's latest head/body pose. As a previous approach to resolve such problems, a computing device, such as a server on a cloud or a laptop connected to the HMD, may render a representation of a scene, including texture and geometry (mesh) information. Such data may be sent to the HMD for local rendering. The data may be used to render multiple frames (e.g., 5 frames). This approach would work well for static objects and account for differences in the scene caused by the user's head movements. However, the approach may not work for scene differences attributable to object animation (e.g., an avatar/dog moving).

In particular embodiments, a system and methods disclosed herein may allow the HMD to warp the mesh for each display frame by providing metadata for vertices in the mesh to the HMD. Vertices on the mesh for an object with skeletal pose estimations (e.g., human avatars) may define the exterior contour of the object. Each vertex on the mesh may be associated with (1) a joint identifier that identifies a joint associated with the vertex, and (2) optional motion data (e.g., velocity/acceleration). The motion data may be supplied by the server if the HMD does not have the information (e.g., movements by another avatar or a virtual dog). In some use cases, the HMD may have the motion data, such as hand-tracking information if the object being rendered is a representation of the user's hands.

In particular embodiments, a server may render a color texture and a depth map associated with an object that is to be rendered at an HMD. The sever may generate a depth mesh from the depth map. The server may associate metadata with a subset of the vertices in the depth mesh. The metadata may comprise joint identifiers or motion data. Then, the server may send the color texture and the metadata-added depth mesh of the object to the HMD. The HMD may, for each frame, warp the depth mesh using the metadata. Warping the depth mesh may comprise warping the vertices based on the corresponding motion data. Warping the depth mesh may also comprise imposing physical constraints based on the joint identifiers to maintain a realistic representation of the object (e.g., the avatar's head can only turn/bend by a certain amount). The amount warped is extrapolated by velocity/acceleration and time. Finally, the HMD may render each frame using the color texture and the depth mesh warped based on the metadata. The HMD may use the received color texture and the metadata-added depth mesh for rendering a plurality of frames.

In particular embodiments, the motion data of an object may be available at the HMD. For example, the HMD may have hand-tracking information for hands of avatar representing the user associated with the HMD. In such a case, the server may determine that the HMD has motion data associated with the object. The server may render a color texture and a depth map associated with the object. The server may generate a depth mesh associated with the object based on the depth map. The server may associate certain vertices within the depth mesh with joint identifiers. The server may send the color texture and the metadata-added depth mesh associated with the object to the HMD. Upon receiving the color texture and the metadata-added depth mesh, the HMD may, for each frame, warp the depth mesh using the metadata and locally generated motion data. The HMD may render each frame using the received color texture and the warped depth mesh. The HMD may use the received color texture and the metadata-added depth mesh for rendering a plurality of frames.

The embodiments disclosed herein are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

FIG. 1A illustrates an example artificial reality system.
FIG. 1B illustrates an example augmented reality system.
FIG. 2 illustrates an example method 200 performed at a computing device 108 for a second proposed solution.
FIG. 3 illustrates an example method 300 performed at the HMD 104 or 110 for a second proposed solution.
FIG. 4 illustrates an example computer system.

### DESCRIPTION OF EXAMPLE EMBODIMENTS

The term "mixed reality" or "MR" as used herein refers to a form of reality that has been adjusted in some manner before presentation to a user, which may include, e.g., virtual reality (VR) (equivalently referred to as "artificial reality"), augmented reality (AR), extended reality (XR), hybrid reality, or some combination and/or derivatives thereof. Mixed reality content may include completely generated content or generated content combined with captured content (e.g., real-world photographs). The mixed reality content may include video, audio, haptic feedback, or some combination thereof, any of which may be presented in a single channel or in multiple channels (such as stereo video that produces a three-dimensional (3D) effect to the viewer). Additionally, in some embodiments, mixed reality may be associated with applications, products, accessories, services, or some combination thereof, that are, e.g., used to interact with content in an immersive application. The mixed reality system that provides the mixed reality content may be implemented on various platforms, including a head-mounted device (HMD) connected to a server, a host computer system, a standalone HMD, a mobile device or computing system, a "cave" environment or other projection system, or any other hardware platform capable of providing mixed reality content to one or more viewers.

"Virtual reality," or "artificial reality," as used herein, refers to an immersive experience where a user's visual input is controlled by a computing system. "Augmented reality" or "AR" as used herein refers to systems where a user views images of the real-world after they have passed through a computing system. For example, a tablet with a camera on the back can capture images of the real-world and then display the images on the screen on the opposite side of the tablet from the camera. The tablet can process and adjust or "augment" the images as they pass through the system, such as by adding virtual objects. AR also refers to systems where light entering a user's eye is partially generated by a computing system and partially composes light reflected off objects in the real-world. For example, an AR headset could be shaped as a pair of glasses with a pass-through display, which allows light from the real-world to pass through a waveguide that simultaneously emits light from a projector in the AR headset, allowing the AR headset to present virtual objects intermixed with the real objects the user can see. The AR headset may be a block-light headset with video pass-through. "Mixed reality" or "MR," as used herein, refers to any of virtual reality, artificial reality, augmented reality, extended reality, hybrid reality, or any combination or variation thereof.

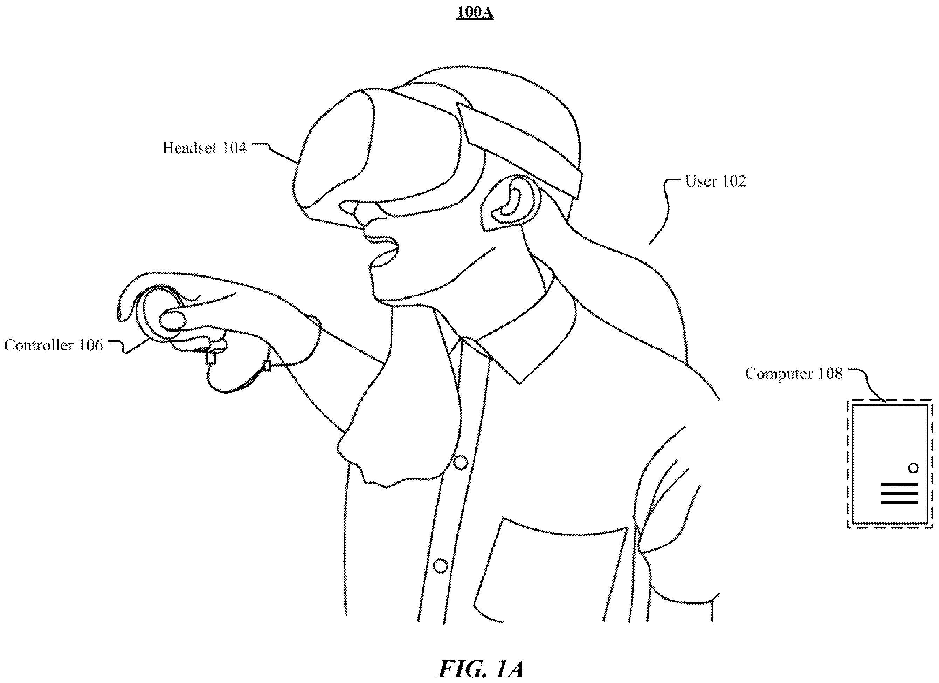

**FIG. 1A** illustrates an example artificial reality system 100A. In particular embodiments, the artificial reality system 100A may comprise a headset 104, a controller 106, and a computing device 108. A user 102 may wear the headset 104 that may display, on one or more displays, visual artificial reality content to the user 102. The headset 104 may include an audio device that may provide audio artificial reality content to the user 102. The headset 104 may include one or more cameras which can capture images and videos of environments. The headset 104 may include an eye tracking system to determine the vergence distance of the user 102. The headset 104 may include a microphone to capture voice input from the user 102. The headset 104 may be referred as a head-mounted device (HMD). The headset 104 may include one or more sensors, including but not limited to inertial measurement units (IMUs), motion sensors, depth sensors (e.g., time of flight depth sensors), and the like. The one or more sensors may be used by the headset 104 to track the user (e.g., the user's hands, feet, eyes, face, and the like), to track objects in the physical environment external to the user, to record the physical environment, or any combination thereof. The controller 106 may comprise a trackpad and one or more buttons. The controller 106 may receive inputs from the user 102 and relay the inputs to the computing device 108. The controller 106 may also provide haptic feedback to the user 102. The computing device 108 may be connected to the headset 104 and the controller 106 through cables or wireless connections. The computing device 108 may control the headset 104 and the controller 106 to provide the artificial reality content to and receive inputs from the user 102. The computing device 108 may be a standalone host computing device, an on-board computing device integrated with the headset 104, a mobile device, a server, or any other hardware platform capable of providing artificial reality content to and receiving inputs from the user 102.

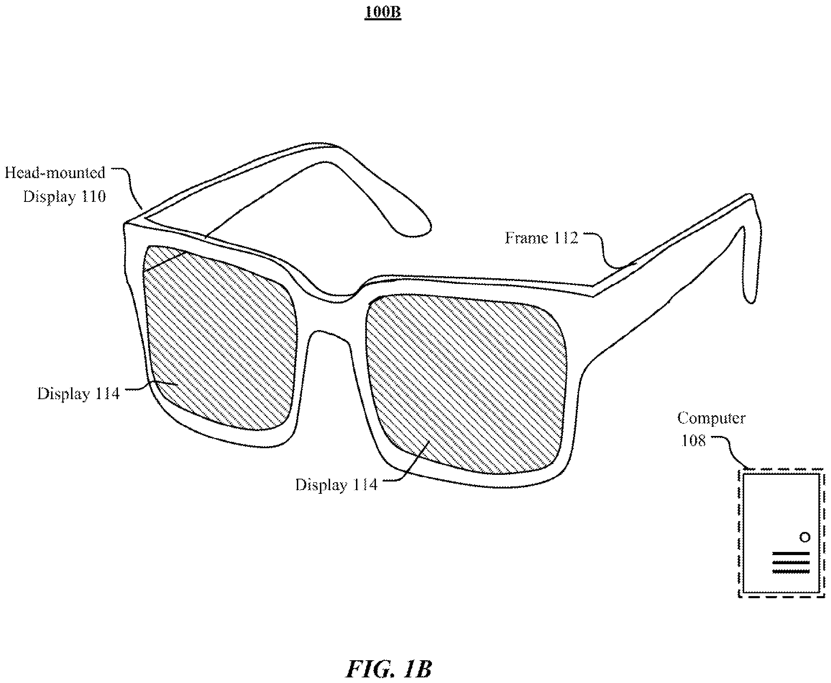

**FIG. 1B** illustrates an example augmented reality system 100B. The augmented reality system 100B may include a head-mounted device (HMD) 110 (e.g., glasses) comprising a frame 112, one or more displays 114, and a computing device 108. The displays 114 may be transparent or translucent allowing a user wearing the HMD 110 to look through the displays 114 to see the real world and displaying visual artificial reality content to the user at the same time. The HMD 110 may include an audio device that may provide audio artificial reality content to users. The HMD 110 may include one or more cameras which can capture images and videos of environments. The HMD 110 may include an eye tracking system to track the vergence movement of the user wearing the HMD 110. The HMD 110 may include a microphone to capture voice input from the user. The HMD 110 may include one or more sensors, including but not limited to inertial measurement units (IMUs), motion sensors, depth sensors (e.g., time of flight depth sensors), and the like. The one or more sensors may be used by the headset 104 to track the user (e.g., the user's hands, feet, eyes, face, and the like), to track objects in the physical environment external to the user, to record the physical environment, or any combination thereof. The controller 106 may comprise a trackpad and one or more buttons. The augmented reality system 100B may further include a controller comprising a trackpad and one or more buttons. The controller may receive inputs from users and relay the inputs to the computing device 108. The controller may also provide haptic feedback to users. The computing device 108 may be connected to the HMD 110 and the controller through cables or wireless connections. The computing device 108 may control the HMD 110 and the controller to provide the augmented reality content to and receive inputs from users. The computing device 108 may be a standalone host computer device, an on-board computer device integrated with the HMD 110, a mobile device, a server, or any other hardware platform capable of providing artificial reality content to and receiving inputs from users.

In particular embodiments, an HMD 104 or 110 may need to offload rendering to another device, such as a server 108 on cloud because the HMD may not have enough computing power. However, the offloading may cause an unacceptable latency in certain situations such as when the HMD needs to display real-time content adjusted based on the user's latest head/body pose. In a previous approach to resolve such problems, a computing device 108, such as a server on a cloud or a laptop connected to the HMD 104 or 110, may render a representation of a scene, including texture and geometry (mesh) information. Such data may be sent to the HMD 104 or 110 for local rendering. The data may be used to render multiple frames (e.g., 5 frames). This approach would work well for static objects and account for differences in the scene caused by the user's head movements. However, the approach may not work for scene differences attributable to object animation (e.g., an avatar/dog moving).

In particular embodiments, methods disclosed herein may allow the HMD 104 or 110 to warp the mesh for each display frame by providing metadata for vertices in the mesh to the HMD 104 or 110. Vertices on the mesh for an object with skeletal pose estimations (e.g., human avatars) may define the exterior contour of the object. Each vertex on the mesh may be associated with (1) a joint identifier that identifies a joint associated with the vertex, and (2) optional motion data (e.g., velocity/acceleration). The motion data may be supplied by the server if the HMD 104 or 110 does not have the information (e.g., movements by another avatar or a virtual dog). In some use cases, the HMD 104 or 110 may have the motion data, such as hand-tracking information if the object being rendered is a representation of the user's hands.

In a first proposed solution, a server 108 may render a color texture and a depth map associated with an object that is to be rendered at an HMD 104 or 110. The server 108 may generate a depth mesh from the depth map. The server 108 may associate metadata with a subset of the vertices in the depth mesh. The metadata may comprise joint identifiers or motion data. Then, the server 108 may send the color texture and the metadata-added depth mesh of the object to the HMD 104 or 110. The HMD 104 or 110 may, for each frame, warp the depth mesh using the metadata. Warping the depth mesh may comprise warping the vertices based on the corresponding motion data. Warping the depth mesh may also comprise imposing physical constraints based on the joint identifiers to maintain a realistic representation of the object (e.g., the avatar's head can only turn/bend by a certain amount). The amount warped is extrapolated by velocity/acceleration and time. Finally, the HMD 104 or 110 may render each frame using the color texture and the depth mesh warped based on the metadata. The HMD 104 or 110 may use the received color texture and the metadata-added depth mesh for rendering a plurality of frames.

In a second proposed solution, the motion data of an object may be considered to be available at the HMD 104 or 110. For example, the HMD 104 or 110 may have hand-tracking information for hands of avatar representing the user associated with the HMD 104 or 110. In such a case, the server may determine that the HMD 104 or 110 has motion data associated with the object. The server may render a color texture and a depth map associated with the object. The server may generate a depth mesh associated with the object based on the depth map. The server may associate certain vertices within the depth mesh with joint identifiers. The server may send the color texture and the metadata-added depth mesh associated with the object to the HMD 104 or 110. Upon receiving the color texture and the metadata-added depth mesh, the HMD 104 or 110 may, for each frame, warp the depth mesh using the metadata and locally generated motion data. The HMD 104 or 110 may render each frame using the received color texture and the warped depth mesh. The HMD 104 or 110 may use the received color texture and the metadata-added depth mesh for rendering a plurality of frames.

The first proposed solution may be meant to address all skinned geometry on a given character for all avatars remote or otherwise. The second proposed solution may handle only the local user's own hands. While the first proposed solution would require complex heuristics to stream the set of avatars' skeletal joint poses, the second proposed solution may use hand pose data that is readily available on the HMD 104 or 110, which eliminates a whole suite of complexity compared to the first proposed solution. Along with a limited set of poses for each hand, reduced complexity may be what makes the second proposed solution a cost effective attractive feature.

The first and second proposed solutions aim to achieve a number of goals. The solutions aim to solve perceived latency of whole hand movement which is one of the most obvious artifacts with the partial rendering offload approach. With the proposed solutions, the perceived hand tracking latency may be reduced to roughly equal the hand tracking latency of a local application running on the HMD 104 or 110. The proposed solutions may also be applied to objects the user is holding in their hands to make sure the latency follows through to that object even though the objects in the hands are not logically part of the hand.

The second proposed solution may need to embed extra metadata into the depth mesh tagging the vertices in a way where the HMD 104 or 110 knows if a given depth mesh vertex belongs to the left, right or neither hand while the HMD 104 or 110 reconstructs the hand(s). By knowing this, the reconstruction logic can apply local transforms on top of the regular depth mesh transform that is currently already being done.

With the proposed solutions, the hand tracking latency may be expected to feel like any regular application that runs completely locally on the HMD 104 or 110. While more complex features including polling every single joint used in each hand may be possible, this would make the feature fairly complex as it would require smooth skinning of the reconstruction mesh, complicate the data shared between the HMD 104 or 110 and the server 108, and would increase the effort to implement the feature fairly significantly.

In particular embodiments, when rendering an avatar with hands, the server 108 may write explicit values for left and right hand into a stencil buffer. A depth-meshing algorithm performed at the server 108 may read in the stencil channel and copy the left and right hands values into the depth mesh vertices. Special attention might be needed in cases where the two hands overlap. When the stencil values differ, the meshing algorithm may need to tessellate around the differing regions to make sure the eventual reconstruction plays nice. The server 108 may also package the depth-mesh and video as well as the hands' joint transforms which were used for rendering the avatar (similar to the camera position that was used when rendering the avatar.

In particular embodiments, the HMD 104 or 110 may decode the depth-mesh which contains the no/left/right hand assignments per-vertex. Before rendering a frame, the HMD 104 or 110 may poll for latest hand transforms on the device using the same central hand transforms (e.g. palm or wrist joint). The HMD 104 or 110 may ready the transformation matrices which would move the depth mesh vertices from the position they were rendered on the server 108 to the new on-device position using the information. While it could be a full 6-DOF transform, the transform could yield too many disocclusion artifacts, so only applying translation offsets per-vertex perpendicular to the view axis might work better. The transforms may be stored in an array for easy access during rendering (0 for none, 1 for left, 2 for right).

With the proposed solutions, during large hand translation moves, even if the server 108 is rendering at low fps, the hands are expected to continue to move smoothly on the HMD 104 or 110.

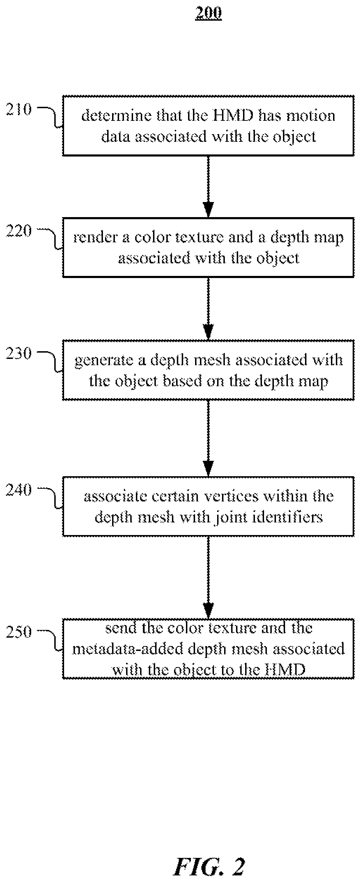

**FIG. 2** illustrates an example method 200 performed at a computing device 108. The method may begin at step 210, where the computing device 108 may determine that the HMD 104 or 110 has motion data associated with the object. At step 220, the computing device 108 may render a color texture and a depth map associated with the object. At step 230, the computing device 108 may generate a depth mesh associated with the object based on the depth map. At step 240, the computing device 108 may associate certain vertices within the depth mesh with joint identifiers. At step 250, the computing device 108 may send the color texture and the metadata-added depth mesh associated with the object to the HMD 104 or 110. Particular embodiments may repeat one or more steps of the method of FIG. 2, where appropriate. Although this disclosure describes and illustrates particular steps of the method of FIG. 2 as occurring in a particular order, this disclosure contemplates any suitable steps of the method of FIG. 2 occurring in any suitable order. Moreover, although this disclosure describes and illustrates an example method performed at the computing device 108 for the second proposed solution including the particular steps of the method of FIG. 2, this disclosure contemplates any suitable method performed at the computing device 108 for the second proposed solution including any suitable steps, which may include all, some, or none of the steps of the method of FIG. 2, where appropriate. Furthermore, although this disclosure describes and illustrates particular components, devices, or systems carrying out particular steps of the method of FIG. 2, this disclosure contemplates any suitable combination of any suitable components, devices, or systems carrying out any suitable steps of the method of FIG. 2.

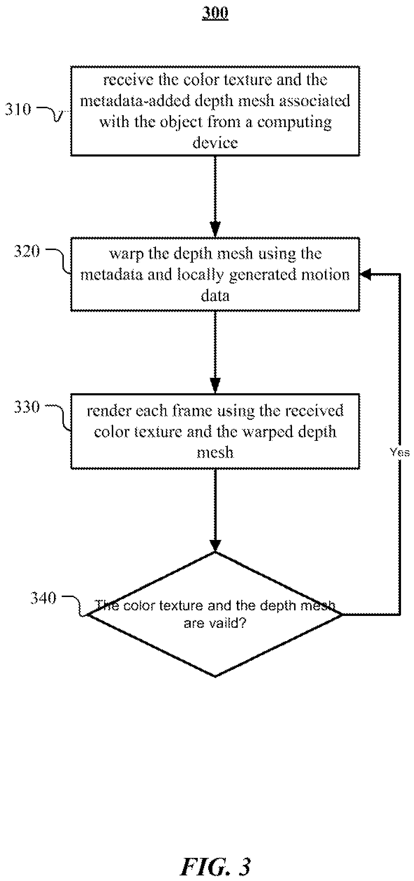

**FIG. 3** illustrates an example method 300 performed at the HMD 104 or 110. The method may begin at step 310, where the HMD 104 or 110 may receive the color texture and the metadata-added depth mesh associated with the object from a computing device 108. At step 320, the HMD 104 or 110 may warp the depth mesh using the metadata and locally generated motion data for a frame. At step 330, the HMD 104 or 110 may render each frame using the received color texture and the warped depth mesh. At step 340, the HMD 104 or 110 may determine whether the color texture and the metadata-added depth mesh associated with the object are still valid. If yes, the method proceed to step 320 and the HMD 104 or 110 may render the object for a next frame. Particular embodiments may repeat one or more steps of the method of FIG. 3, where appropriate. Although this disclosure describes and illustrates particular steps of the method of FIG. 3 as occurring in a particular order, this disclosure contemplates any suitable steps of the method of FIG. 3 occurring in any suitable order. Moreover, although this disclosure describes and illustrates an example method performed at the HMD 104 or 110 for a second proposed solution including the particular steps of the method of FIG. 3, this disclosure contemplates any suitable method for performed at the HMD 104 or 110 for a second proposed solution including any suitable steps, which may include all, some, or none of the steps of the method of FIG. 3, where appropriate. Furthermore, although this disclosure describes and illustrates particular components, devices, or systems carrying out particular steps of the method of FIG. 3, this disclosure contemplates any suitable combination of any suitable components, devices, or systems carrying out any suitable steps of the method of FIG. 3.

### Systems and Methods

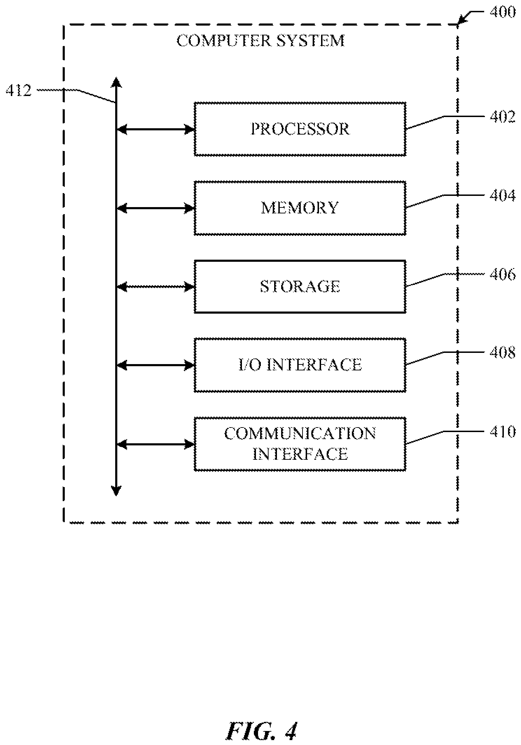

**FIG. 4** illustrates an example computer system 400. In particular embodiments, one or more computer systems 400 perform one or more steps of one or more methods described or illustrated herein. In particular embodiments, one or more computer systems 400 provide functionality described or illustrated herein. In particular embodiments, software running on one or more computer systems 400 performs one or more steps of one or more methods described or illustrated herein or provides functionality described or illustrated herein. Particular embodiments include one or more portions of one or more computer systems 400. Herein, reference to a computer system may encompass a computing device, and vice versa, where appropriate. Moreover, reference to a computer system may encompass one or more computer systems, where appropriate.

This disclosure contemplates any suitable number of computer systems 400. This disclosure contemplates computer system 400 taking any suitable physical form. As example and not by way of limitation, computer system 400 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a headset, smart glasses, a wearable device, a head-mounted device, a server, a tablet computer system, or a combination of two or more of these. Where appropriate, computer system 400 may include one or more computer systems 400; be unitary or distributed; span multiple locations; span multiple machines; span multiple data centers; or reside in a cloud, which may include one or more cloud components in one or more networks. Where appropriate, one or more computer systems 400 may perform without substantial spatial or temporal limitation one or more steps of one or more methods described or illustrated herein. As an example and not by way of limitation, one or more computer systems 400 may perform in real time or in batch mode one or more steps of one or more methods described or illustrated herein. One or more computer systems 400 may perform at different times or at different locations one or more steps of one or more methods described or illustrated herein, where appropriate.

In particular embodiments, computer system 400 includes a processor 402, memory 404, storage 406, an input/output (I/O) interface 408, a communication interface 410, and a bus 412. Although this disclosure describes and illustrates a particular computer system having a particular number of particular components in a particular arrangement, this disclosure contemplates any suitable computer system having any suitable number of any suitable components in any suitable arrangement.

In particular embodiments, processor 402 includes hardware for executing instructions, such as those making up a computer program. As an example and not by way of limitation, to execute instructions, processor 402 may retrieve (or fetch) the instructions from an internal register, an internal cache, memory 404, or storage 406; decode and execute them; and then write one or more results to an internal register, an internal cache, memory 404, or storage 406. In particular embodiments, processor 402 may include one or more internal caches for data, instructions, or addresses. This disclosure contemplates processor 402 including any suitable number of any suitable internal caches, where appropriate. As an example and not by way of limitation, processor 402 may include one or more instruction caches, one or more data caches, and one or more translation lookaside buffers (TLBs). Instructions in the instruction caches may be copies of instructions in memory 404 or storage 406, and the instruction caches may speed up retrieval of those instructions by processor 402. Data in the data caches may be copies of data in memory 404 or storage 406 for instructions executing at processor 402 to operate on; the results of previous instructions executed at processor 402 for access by subsequent instructions executing at processor 402 or for writing to memory 404 or storage 406; or other suitable data. The data caches may speed up read or write operations by processor 402. The TLBs may speed up virtualaddress translation for processor 402. In particular embodiments, processor 402 may include one or more internal registers for data, instructions, or addresses. This disclosure contemplates processor 402 including any suitable number of any suitable internal registers, where appropriate. Where appropriate, processor 402 may include one or more arithmetic logic units (ALUs); be a multi-core processor; or include one or more processors 402. Although this disclosure describes and illustrates a particular processor, this disclosure contemplates any suitable processor.

In particular embodiments, memory 404 includes main memory for storing instructions for processor 402 to execute or data for processor 402 to operate on. As an example and not by way of limitation, computer system 400 may load instructions from storage 406 or another source (such as, for example, another computer system 400) to memory 404. Processor 402 may then load the instructions from memory 404 to an internal register or internal cache. To execute the instructions, processor 402 may retrieve the instructions from the internal register or internal cache and decode them. During or after execution of the instructions, processor 402 may write one or more results (which may be intermediate or final results) to the internal register or internal cache. Processor 402 may then write one or more of those results to memory 404. In particular embodiments, processor 402 executes only instructions in one or more internal registers or internal caches or in memory 404 (as opposed to storage 406 or elsewhere) and operates only on data in one or more internal registers or internal caches or in memory 404 (as opposed to storage 406 or elsewhere). One or more memory buses (which may each include an address bus and a data bus) may couple processor 402 to memory 404. Bus 412 may include one or more memory buses, as described below. In particular embodiments, one or more memory management units (MMUs) reside between processor 402 and memory 404 and facilitate accesses to memory 404 requested by processor 402. In particular embodiments, memory 404 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 404 may include one or more memories 404, where appropriate. Although this disclosure describes and illustrates particular memory, this disclosure contemplates any suitable memory.

In particular embodiments, storage 406 includes mass storage for data or instructions. As an example and not by way of limitation, storage 406 may include a hard disk drive (HDD), a floppy disk drive, flash memory, an optical disc, a magneto-optical disc, magnetic tape, or a Universal Serial Bus (USB) drive or a combination of two or more of these. Storage 406 may include removable or non-removable (or fixed) media, where appropriate. Storage 406 may be internal or external to computer system 400, where appropriate. In particular embodiments, storage 406 is non-volatile, solid-state memory. In particular embodiments, storage 406 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 406 taking any suitable physical form. Storage 406 may include one or more storage control units facilitating communication between processor 402 and storage 406, where appropriate. Where appropriate, storage 406 may include one or more storages 406. Although this disclosure describes and illustrates particular storage, this disclosure contemplates any suitable storage.

In particular embodiments, I/O interface 408 includes hardware, software, or both, providing one or more interfaces for communication between computer system 400 and one or more I/O devices. Computer system 400 may include one or more of these I/O devices, where appropriate. One or more of these I/O devices may enable communication between a person and computer system 400. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 408 for them. Where appropriate, I/O interface 408 may include one or more device or software drivers enabling processor 402 to drive one or more of these I/O devices. I/O interface 408 may include one or more I/O interfaces 408, where appropriate. Although this disclosure describes and illustrates a particular I/O interface, this disclosure contemplates any suitable I/O interface.

In particular embodiments, communication interface 410 includes hardware, software, or both providing one or more interfaces for communication (such as, for example, packet-based communication) between computer system 400 and one or more other computer systems 400 or one or more networks. As an example and not by way of limitation, communication interface 410 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 410 for it. As an example and not by way of limitation, computer system 400 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 400 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 400 may include any suitable communication interface 410 for any of these networks, where appropriate. Communication interface 410 may include one or more communication interfaces 410, where appropriate. Although this disclosure describes and illustrates a particular communication interface, this disclosure contemplates any suitable communication interface.

In particular embodiments, bus 412 includes hardware, software, or both coupling components of computer system 400 to each other. As an example and not by way of limitation, bus 412 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a lowpin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 412 may include one or more buses 412, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, fieldprogrammable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. All references to computer-readable non-transitory storage media in the claims are understood to refer solely to non-transitory non-volatile storage media.

### Miscellaneous

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A method for rendering a frame, comprising:
receiving, from a server, a color texture and a depth mesh associated with an object to be rendered, wherein the depth mesh comprises a plurality of vertices and metadata associated with the plurality of vertices;
receiving motion data associated with the object;
warping the depth mesh using the metadata and the motion data, resulting in a warped depth mesh; and
rendering one or more frames using the color texture and the warped depth mesh.

2. The method of claim 1, wherein the warped depth mesh is a first warped depth mesh, the method further comprising:
receiving updated motion data associated with the object;
making a determination that the color texture and the depth mesh are valid;
based on the determination, warping the depth mesh using the metadata and the updated motion data, resulting in a second warped depth mesh; and
rendering one or more additional frames using the color texture and the second warped depth mesh.

3. The method of claim 1 or claim 2, wherein the motion data is received from the server.

4. The method of any preceding claim, wherein warping the depth mesh comprises warping the plurality of vertices based on the motion data.

5. The method of any preceding claim, wherein the metadata further comprises a plurality of joint identifiers, each joint identifier associated with one or more vertices.

6. The method of any preceding claim, wherein warping the depth mesh comprises imposing at least one physical constraint on the plurality of vertices based on the joint identifiers.

7. The method of any preceding claim, wherein the plurality of vertices define an exterior contour of the object.

8. The method of any preceding claim, wherein the depth mesh is generated by the server based on a depth map associated with the object.

9. The method of any preceding claim, wherein the method is performed by a head-mounted device worn by a user to display a mixed reality environment thereto; and optionally wherein the head-mounted device comprises one or more motion sensors, and the motion data is received from the one or more motion sensors.

10. The method of claim 9, wherein the mixed reality environment comprises one or more of:
a user avatar associated with the user, and the object to be rendered is a hand of the user avatar, in which case optionally the plurality of vertices comprises a first subset of vertices and a second subset of vertices, and the metadata further comprises a left hand identifier associated with the first subset of the vertices and a right hand identifier associated with the second subset of vertices;
a user avatar associated with the user, and the object to be rendered is held by one or more hands of the user avatar;
an animated object in the mixed reality environment within a field of view of the user..

11. The method of any preceding claim, wherein the motion data comprises velocity and acceleration data associated with the plurality of vertices.

12. A non-transitory computer-readable medium storing a program for rendering a frame, which when executed by a computer system, configures the computer system to:
receive, from a server, a color texture and a depth mesh associated with an object to be rendered, wherein the depth mesh comprises a plurality of vertices and metadata associated with the plurality of vertices;
receive motion data associated with the object;
warp the depth mesh using the metadata and the motion data, resulting in a warped depth mesh; and
render one or more frames using the color texture and the warped depth mesh,
wherein the depth mesh is generated by the server based on a depth map associated with the object.

13. The non-transitory computer-readable medium of claim 12, wherein the program, when executed by the computer, further configures the computer system to:
receive updated motion data associated with the object;
make a determination that the color texture and the depth mesh are valid;
based on the determination, warp the depth mesh using the metadata and the updated motion data, resulting in a second warped depth mesh; and
render one or more additional frames using the color texture and the second warped depth mesh.

14. The non-transitory computer-readable medium of claim 12 or 13, wherein the program, when executed by the computer system, further configures the computer system to:
receive signals from one or more sensors; and
generate the motion data based on the received signals.

15. A head-mounted device, comprising:
a processor;
one or more motion sensors; and
a non-transitory computer readable medium storing a set of instructions for rendering a frame, which when executed by the processor, configure the head-mounted device to:
receive, from a server, a color texture and a depth mesh associated with an object to be rendered, wherein the depth mesh comprises a plurality of vertices and metadata associated with the plurality of vertices;
receive, from the one or more motion sensors, motion data associated with the object;
warp the depth mesh using the metadata and the motion data, resulting in a warped depth mesh; and
render one or more frames using the color texture and the warped depth mesh,
wherein the depth mesh is generated by the server based on a depth map associated with the object.
